# EUROPÄISCHE PATENTSCHRIFT

(11) **EP 1 800 830 B1**
(45) Veröffentlichungstag und Bekanntmachung des Hinweises auf die Patenterteilung: **25.03.2009**
(21) Anmeldenummer: 06125401.7
(22) Anmeldetag: 05.12.2006
(51) Int. Cl.: B29C 47/02, F16L 58/10

(54) **Anlage zur Herstellung eines Mehrschichtverbundrohres**
System for manufacturing a multi-layer composite pipe
Installation destinée à la fabrication d'un tube d'assemblage multicouches

(30) Priorität: 23.12.2005 DE 102005061783
(43) Veröffentlichungstag der Anmeldung: 27.06.2007
(73) Patentinhaber: Uponor Innovation AB, 513 81 Fristad (SE)
(72) Erfinder: Winterstein, Ralf, 98617 Meiningen (DE); Stock, Hartmut, 98544 Zella-Mehlis (DE)
(74) Vertreter: Hilleringmann, Jochen

(56) Entgegenhaltungen:
- EP-A- 0 353 977
- EP-A1- 0 024 220
- DE-A1- 1 629 736
- FR-A1- 2 434 326

## Beschreibung

Die Erfindung betrifft eine Anlage zur Herstellung eines Mehrschichtverbundrohres, das ein Innenrohr aus Kunststoff, ein dieses umgebendes Metallrohr und ein das Metallrohr umgebendes Außenrohr aus Kunststoff aufweist.

Derartige Mehrschichtverbundrohre sind im Stand der Technik grundsätzlich bekannt. Der Vorteil dieser Verbundrohre ist, dass sie die Vorzüge reiner Kunststoffrohre mit denen von Metallrohren vereinigen, ohne die Nachteile dieser Rohrtypen zu übernehmen.

Verfahren und Vorrichtungen zur Herstellung von Verbundrohren sind beispielsweise in WO-A-00/44546 und WO-A-01/85430 beschrieben. Diese beiden Schriften befassen sich mit der Herstellung von Mehrschichtverbundrohren, bei denen zunächst das Metallrohr aus einem Metallband gefertigt wird und dann das Innenrohr in das so hergestellte Metallrohr hinein extrudiert wird. Dabei können die Ränder des Metallstreifens, der zum Metallrohr geformt wird, überlappt, verklebt oder verschweißt oder auf Stoß verschweißt sein. Ein weiteres Verfahren sowie eine entsprechende Vorrichtung zur Herstellung eines Mehrschichtverbundrohres, bei dem das Metallrohr durch einen spiralförmig aufgewickeltes Metallstreifen hergestellt wird, ist in EP-B-0 823 295 beschrieben.

Verfahren und Vorrichtungen zur Herstellung von Mehrschichtverbundrohren, bei denen das Metallrohr durch Formen eines Metallstreifens um ein bereits extrudiertes Innenrohr hergestellt wird, sind aus EP-B-0 823 867 und EP-B-0 938 389 bekannt.

Die Herstellung von Mehrschichtverbundrohren, wie in WO-A-01/85430 beschrieben, wonach unmittelbar nach der Verschweißung des Metallrohres durch Extrusion des Innenrohres und Extrusion des Außenrohres das komplette Rohr hergestellt wird, hat sich in der Praxis grundsätzlich bewährt. Der Wunsch, die Herstellungszeiten von Mehrschichtverbundrohren zu verkürzen, macht es allerdings erforderlich, über neue Ansätze nachzudenken.

Ein weiteres Verfahren zur Herstellung eines Mehrschichtverbundrohres ist in EP-A-0 024 220 beschrieben. Bei diesem Verfahren werden gleichzeitig innen und außen auf einem Metallrohr Kunststoffschichten extrudiert, ohne dass das Rohr dabei gekühlt wird.

Aufgabe der Erfindung ist es daher, eine Anlage zur Herstellung eines Mehrschichtverbundrohres zu schaffen, dass sich mit erhöhten Produktionsgeschwindigkeiten fertigen lässt.

Zur Lösung dieser Aufgabe wird mit der Erfindung eine Anlage zur Herstellung eines Mehrschichtverbundrohres vorgeschlagen, das ein Innenrohr aus Kunststoff, ein dieses umgebendes Metallrohr und ein das Metallrohr umgebendes Außenrohr aus Kunststoff aufweist, wobei die Anlage versehen ist mit den Merkmalen des Anspruchs 1.

Nach der Erfindung wird zunächst aus einem Metallstreifen durch Umformen desselben ein Metallrohr hergestellt, das an den Längsrändern des Metallstreifens eine Schweißnaht aufweist. Diese Schweißnaht kann durch Stumpfverschweißung oder Überlappungsverschweißung der Ränder des Metallstreifens erzeugt worden sein. Alternativ dazu ist es möglich, dass das Metallrohr durch schraubenlinienförmiges Wickeln eines metallstreifens gebildet ist. Erfindungsgemäß wird nach der Verschweißung des Rohres in dieses über eine Innenrohr-Extrusionseinrichtung das Innenrohr extrudiert. Dies erfolgt konstruktionsbedingt in relativ kurzem Abstand nach der Verschweißung der Ränder des Metallstreifens, aus dem das Metallrohr geformt ist. Das Extrudat wird über eine Lanze bzw. einen Dorn in das gerade geschlossene Metallrohr eingebracht und von innen gegen dieses extrudiert. Das so hergestellte Zwischen-Verbundrohr aus Kunststoff-Innenrohr und Metall-Außenrohr wird nun erfindungsgemäß gekühlt, und zwar in einer ersten Kühleinrichtung zum Abkühlenlassen des Rohres. Hierbei kann es sich um eine Einrichtung handeln, innerhalb derer das Zwischen-Verbundrohr der Umgebung bzw. der Umgebungsluft ausgesetzt ist. Alternativ dazu ist es möglich und bevorzugt, das Zwischen-Verbundrohr durch ein Kühlbad hindurchzuführen.

Nach der Abkühlung erfolgt in einer Außenrohr-Extrusionseinrichtung das Extrudieren des Außenrohres auf das Zwischen-Verbundrohr bzw. von außen auf dessen Metallrohr, wodurch das Mehrschichtverbundrohr hergestellt ist.

Die erfindungsgemäß vorgesehene Abkühlung des Zwischen-Verbundrohres vor der Aufbringung des Außenrohres hat den Vorteil, dass die Kühlung äußerst effektiv und innerhalb relativ kurzer Zeit erfolgen kann. Denn beim Zwischen-Verbundrohr liegt das Metallrohr außen. Metalle sind grundsätzlich gute Wärmeleiter, führen also die beim Extrudieren eingebrachte Wärme gut nach außen ab. Dadurch ist eine äußerst effektive Abkühlungsrate gegeben.

Des weiteren ist die Abkühlung des Zwischen-Verbundrohres von Vorteil, wenn es um die Abquetschung des Rohres geht, was von Zeit zu Zeit während der Produktion des Mehrschichtverbundrohres und insbesondere beim Austausch einer Haspel zum aufwickeln des hergestellten Rohres am Ende des Produktionsprozesses erfolgen muss. Wie bereits oben erwähnt, wird nach der Erfindung das Innenrohr in das Metallrohr hinein extrudiert. Um zu verhindern, dass das Extrudat zusammenfällt, wird neben dem Kunststoff über eine Düse auch Luft in das ringförmige Extrudat eingebracht. Über diese Luft wird auf Grund eines im Rohr anstehenden Gegendrucks das noch weiche Kunststoff von innen gegen das Metallrohr gedrückt. Um einen Gegendruck im Rohr aufbauen zu können, muss dieses im wesentlichen luftdicht verschlossen sein. Dies erfolgt durch die Abquetschvorrichtung, die erfindungsgemäß innerhalb der ersten Kühleinrichtung angeordnet werden kann, wo die zusammengedrückte Abquetschstelle des Rohres sehr schnell abkühlt und aushärtet und somit erstarrt, wodurch das Rohr zuverlässig abgedichtet ist.

In vorteilhafter Weiterbildung der Erfindung ist ferner vorgesehen, dass im Anschluss an die Außenrohr-Extrusionseinrichtung eine zweite Kühleinrichtung zum Abkühlenlassen des Mehrschichtverbundrohres nach der Aufbringung des Außenrohres auf das Zwischen-Verbundrohr angeordnet ist. Auch bei dieser zweiten Kühleinrichtung kann es sich um eine Einrichtung handeln, innerhalb derer das Mehrschichtverbundrohr der Umgebungsluft ausgesetzt ist und über diese abkühlt. Zweckmäßiger ist es allerdings, wenn auch hier ein Kühlbad verwendet wird.

Sofern bei den Kühleinrichtungen mit einer Kühifltissigkeit gearbeitet wird, ist es zweckmäßig, am Ende der Kühleinrichtung das Rohr mittels einer Trocknungsstation zu trocknen. Hier bietet sich beispielsweise ein (Trocknungs-) Luftstrom an, dem das Rohr ausgesetzt wird.

Die erfindungsgemäße Anlage umfasst auch den Fall, dass die Abkühlung in der ersten Kühleinrichtung durch Transportieren des Zwischen-Verbundrohres in der Umgebungsluft, wenn auch nur für eine relativ kurze Strecke, erfolgt, wie es beispielsweise erforderlich ist, um das Zwischen-Verbundrohr zwecks Vermessung seines Außendurchmessers an einer Messstation vorbeizuführen.

Zwischen dem Innenrohr 27 und dem Metallrohr 16 und zwischen dem Metallrohr 16 und dem Außenrohr 39 befindet sich jeweils eine Haftvermittler-(Klebe-)Schicht (nicht dargestellt), wie es an sich für die Anbindung der Kunststoffschichten von Innen- und Außenrohr an das Metallrohr 16 bekannt ist. Die Extrusion der jeweiligen Haftvermittlerschicht erfolgt zweckmäßigerweise als Coextrusion in den Extrusionseinrichtungen 24 und 36 für das Innen- und das Außenrohr 27,39.

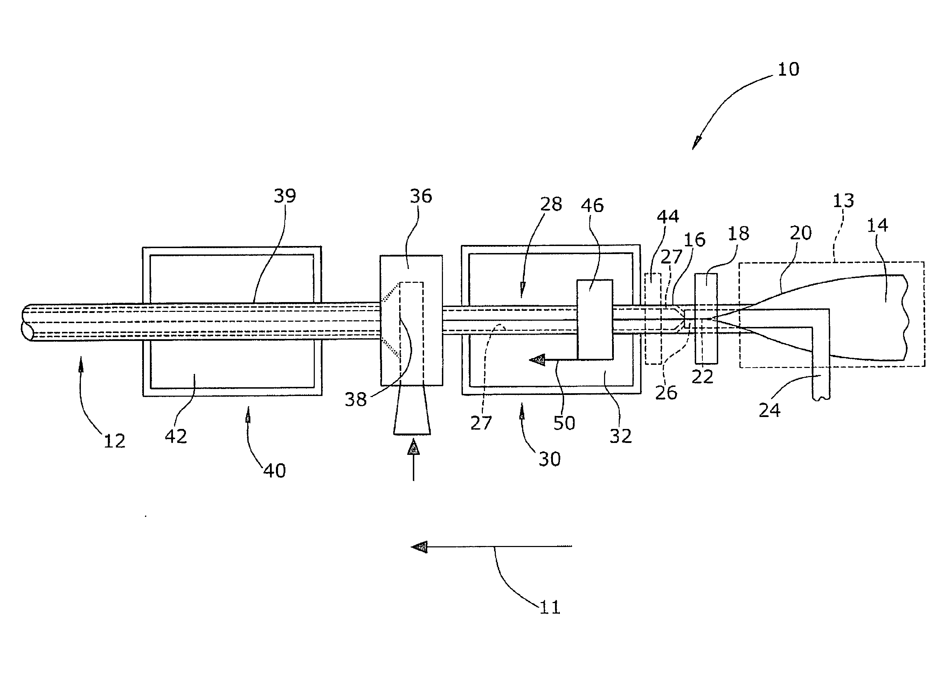

Die Erfindung wird nachfolgend anhand der Zeichnung näher erläutert. In dieser Zeichnung ist in Draufsicht und stark vereinfacht eine Anlage zur Herstellung eines Mehrschichtverbundrohres gezeigt.

Die in der Zeichnung dargestellte Anlage 10 mit Fertigungsrichtung 11 zur Herstellung eines Mehrschichtverbundrohres 12 umfasst eine Metallrohrformeinrichtung 13, in der aus einem in diesem Ausführungsbeispiel axial zum herzustellenden Mehrschichtverbundrohr zugeführten Metallstreifen 14 aus in diesem Ausführungsbeispiel Aluminium ein Metallrohr 16 geformt wird. In einer Schweißstation 18 werden die in diesem Ausführungsbeispiel stumpf verschweißten Längsränder 20 des Metallstreifens 14 verschweißt, so dass eine Längsschweißnaht 22 entsteht.

In das so verschweißte Metallrohr 16 wird unmittelbar nach der Verschweißung mittels einer Innenrohr-Extrusionseinrichtung 24, der eine Auslassringdüse 26 aufweist, ein Kunststoff-Innenrohr 27 hinein extrudiert. Zusätzlich wird in das Innenrohr 27 Druckluft eingebracht (nicht dargestellt), so dass das Innenrohr 27 gegen das Metallrohr 16 gedrückt wird und in diesem Zustand aushärten kann.

Anschließend durchläuft das Zwischen-Verbundrohr 28 innerhalb einer ersten Kühleinrichtung 30 ein Kühlbad 32, an dessen Ende es beispielsweise mit Hilfe eines Luftstroms in einer Trocknungsstation (nicht gezeigt) wieder getrocknet wird.

Im Anschluss daran bewegt sich das Zwischen-Verbundrohr 28 durch eine Außenrohr-Extrusionseinrichtung 36, die eine Ringdüse 38 aufweist, über die ein Außenrohr 39 aus Kunststoff auf das Metallrohr 16 aufextrudiert wird. Das so erhaltene Mehrschichtverbundrohr 12 durchläuft wiederum in einer (zweiten) Kühleinrichtung 40 ein Kühlbad 42, in dem es abkühlt.

Der Vorteil der in Fertigungsrichtung 11 hinter der Extrusion des Kunststoffrohres 27 angeordneten ersten Kühleinrichtung 30 besteht in der äußerst effektiven Abkühlung des Zwischen-Verbundrohres 28, bevor in dieses durch das Extrudieren des Außenrohres 39 weitere Wärme eingebracht wird. Die zwischenzeitliche Abkühlung des Zwischen-Verbundrohres 28 macht hohe Produktionsgeschwindigkeiten möglich, und zwar bei kurzen Anlagenlängen, was in mehrerlei Hinsicht von Vorteil ist.

Wie in der Zeichnung angedeutet, kann sich hinter der Schweißstation 18 eine Messstation 44 befinden, innerhalb derer der Außendurchmesser des Zwischen-Verbundrohres 28 messtechnisch erfasst wird. Dies dient unter anderem der Qualitätssicherung. Bei der Messstation 44 handelt es sich um ein geeignetes Messgerät, wie es im Stand der Technik grundsätzlich bekannt ist.

Eine weitere Besonderheit der in der Zeichnung dargestellten Anlage 10 ist in der Möglichkeit zu sehen, innerhalb der ersten Kühleinrichtung 30 eine Abquetschvorrichtung 46 anzuordnen, mittels derer das noch weiche Zwischen-Verbundrohr 28, das aus dem (dünnen) Metallrohr 16 und dem noch nicht erstarrten Kunststoff-Innenrohr 27 besteht, luftdicht abgequetscht werden kann, Diese luftdichte Abquetschung ist erforderlich, um innerhalb des Kunststoff-Innenrohres 27 den oben bereits beschriebenen Gegendruck aufbauen zu können, der dafür sorgt, dass das noch weiche Kunststoff-Innenrohr 27 nach außen gedrückt wird und damit ein Zusammenfallen des Kunststoff-Innenrohres 27 verhindert wird. Die Abquetschvorrichtung 46 wird in Fertigungsrichtung 11, wie mit dem Pfeil 50 angedeutet, über eine gewisse Wegstrecke innerhalb der ersten Kühleinrichtung 30 bzw. innerhalb des Kühlbades 32 mitbewegt. Durch die rasche Abkühlung des Zwischen-Verbundrohres 28 härtet somit auch die Abquetschstelle schnell und zuverlässig aus. Die Abquetschstelle bleibt durch ihre (vollständige) Aushärtung dauerhaft und in für den Aufbau des Gegendrucks im Innenrohr 27 ausreichenden Maße dicht.

## Patentansprüche

1. Anlage zur Herstellung eines Mehrschichtverbundrohres, das ein Innenrohr (27) aus Kunststoff, ein dieses umgebendes Metallrohr (16) und ein das Metallrohr (16) umgebendes Außenrohr (39) aus Kunststoff aufweist, mit
- einer Metalirohrformeinrichtung (13) zum Formen eines Metallrohres (16) aus einem Metallstreifen (14),
- einer Schweißstation (18) zum Verschweißen der Ränder (20) des zu einem Metallrohr (16) geformten Metallstreifens (14),
- einer Innenrohr-Extrusionseinrichtung (24) zum Extrudieren des Innenrohres (27) in das verschweißte Metallrohr (16),
- einer ersten Kühleinrichtung (30) zum Abkühlenlassen des das Innenrohr (27) und das Metallrohr (16) aufweisenden Zwischen-Verbundrohres (28) und
- einer Außenrohr-Extrusionseinrichtung (36) zum Extrudieren des Außenrohres (39) auf das Zwischen-Verbundrohr (28) zur Herstellung des Mehrschichtverbundrohres (12).

2. Anlage nach Anspruch 1, **gekennzeichnet durch** eine Druckluft-Beaufschlagungseinrichtung zum Beaufschlagen des gegen das Metallrohr (16) extrudierten Innenrohres (27) mit Druckluft zwecks Andrückens des extrudierten Innenrohres (27) von innen gegen das verschweißte Metallrohr (16) und eine Abquetscheinrichtung (46) zum Abquetschen und Verschließen des Zwischen-Verbundrohres (28) zwecks Aufrechterhaltens eines Innendrucks im extrudierten Innenrohr (27), wobei die Abquetscheinrichtung (46) innerhalb der ersten Kühleinrichtung (30) längs einer Transportstrecke für das Zwischen-Verbundrohr (28) verfahrbar ist,

3. Anlage nach Anspruch 1 oder 2, **dadurch gekennzeichnet, dass** die erste Kühleinrichtung (30) eine Transportstrecke für das Zwischen-Verbundrohr (28) aufweist, innerhalb derer das Zwischen-Verbundrohr (28) durch ein Kühlbad (32) transportierbar ist.

4. Anlage nach Anspruch 3, **dadurch gekennzeichnet, dass** die erste Kühleinrichtung (30) eine Trocknungsstation zum Trocknen des durch das Kühlbad (32) transportieren Zwischen-Verbundrohres (28) aufweist.

5. Anlage nach einem der Ansprüche 1 bis 4, **dadurch gekennzeichnet, dass** die erste Kühleinrichtung (30) eine Transportstrecke für das Zwischen-Verbundrohr (28) aufweist, innerhalb derer das Zwischen-Verbundrohr (28) der Umgebung ausgesetzt ist.

6. Anlage nach einem der Ansprüche 1 bis 5, **gekennzeichnet durch** eine zweite Kühleinrichtung (40) zum Abkühlenlassen des Mehrschichtverbundrohres (12) nach der Aufbringung des Außenrohres (39) auf das Zwischen-Verbundrohr (28).

7. Anlage nach einem der Ansprüche 1 bis 6, **dadurch gekennzeichnet, dass** die zweite Kühleinrichtung (40) eine Transportstrecke für das Mehrschichtverbundrohr (12) aufweist, innerhalb derer das Mehrschichtverbundrohr (12) durch ein Kühlbad (42) transportierbar ist.

8. Anlage nach Anspruch 7, **dadurch gekennzeichnet, dass** die zweite Kühleinrichtung (40) eine Trocknungsstation zum Trocknen des durch das Kühlbad (42) transportierten Mehrschichtverbundrohres (12) aufweist.

9. Anlage nach einem der Ansprüche 1 bis 8, **dadurch gekennzeichnet, dass** die Metallrohrformeinrichtung (13) zur Bindung eines Metallrohres (16) mit überlappenden oder aneinanderstoßenden Rändern (20) des Metallstreifens (14) vorgesehen ist.

10. Anlage nach Anspruch 9, **dadurch gekennzeichnet, dass** die Längsränder (20) des Metallstreifens (14) des geformten Metallrohres (16) im wesentlichen in Längserstreckung des Metallrohres (16) oder schraubenlinienförmig verlaufen.

11. Anlage nach einem der Ansprüche 1 bis 10, **dadurch gekennzeichnet, dass** zwischen der Schweißstation (18) und der Außenrohr-Extrusionseinrichtung (36) eine Messstation (44) zum Messen des Außendurchmessers des Metallrohres (16) und/oder des Zwischen-Verbundrohres (28) angeordnet ist.

## Claims

1. System for manufacturing a multilayer composite pipe with an inner pipe (27) of plastic material, a metal pipe (16) surrounding the same and an outer pipe (39) of plastic material surrounding the metal pipe (16), comprising
- a metal pipe forming means (13) for forming a metal pipe (16) from a metal band (14),
- a welding station (18) for welding the edges (20) of the metal band (14) formed into a metal pipe (16),
- an inner pipe extrusion means (24) for extruding the inner pipe (27) into the welded metal pipe (16),
- a first cooling means (30) for allowing the intermediate composite pipe (28) consisting of the inner pipe (27) and the metal pipe (16) to cool, and
- an outer pipe extrusion means (36) for extruding the outer pipe (39) onto the intermediate composite pipe (28) to manufacture the multilayer composite pipe (12).

2. The system of claim 1, **characterized by** a pneumatic pressurization means for pressurizing the inner pipe (27) extruded against the metal pipe (16) with pressurized air in order to press the extruded inner pipe (27) against the metal pipe (16) from inside, and a squeezing means (46) for squeezing and closing the intermediate composite pipe (28) in order to maintain an inner pressure in the extruded inner pipe (27), the squeezing means (46) being movable within the first cooling means (30) along a transport path for the intermediate composite pipe (28).

3. The system of claim 1 or 2, **characterized in that** the first cooling means (30) comprises a first transport path for the intermediate composite pipe (28) within which the intermediate composite pipe (28) may be transported through a quenching bath (32).

4. The system of claim 3, **characterized in that** the first cooling means (30) comprises a drying station for drying the intermediate composite pipe (28) transported through the cooling bath (32).

5. The system of one of claims 1 to 4, **characterized in that** the first cooling means (30) comprises a transport path for the intermediate composite pipe (28) within which the intermediate composite pipe (28) is exposed to the environment.

6. The system of one of claims 1 to 5, **characterized by** a second cooling means (40) for allowing the multilayer composite pipe (12) to cool after the outer pipe (39) has been applied onto the intermediate composite pipe (28).

7. The system of one of claims 1 to 6, **characterized in that** the second cooling means (40) comprises a transport path for the multilayer composite pipe (12) within which the multilayer composite pipe (12) may be transported through a quenching bath (42).

8. The system of claim 7, **characterized in that** the second cooling means (40) comprises a drying station for drying the multilayer composite pipe (12) transported through the quenching bath (42).

9. The system of one of claims 1 to 8, **characterized in that** the metal pipe forming means (13) is provided for forming a metal pipe (16) with overlapping or abutting edges (20) of the metal band (14).

10. The system of claim 9, **characterized in that** the longitudinal edges (20) of the metal band (14) of the formed metal pipe (16) extend substantially in the longitudinal direction of the metal pipe (16) or helically.

11. The system of one of claims 1 to 10, **characterized in that** a measuring station (44) is provided between welding station (18) and the outer pipe extrusion means (36), for measuring the outer diameter of the metal pipe (16) and/or the intermediate composite pipe (28).

## Revendications

1. Installation destine à la fabrication d'un tube d'assemblage multicouches comprenant un tube intérieur (27) en matière plastique, un tube métallique (16) entourant ledit tube intérieur, et un tube extérieur (39) en matière plastique entourant le tube métallique (16), comprenant
- un moyen de façonnage de tubes métalliques (13) pour façonner un tube métallique (16) d'une bande métallique (14),
- une station de soudage (18) pour souder les bords (20) de la bande métallique (14) façonnée en un tube métallique (16),
- un moyen d'extrusion de tubes intérieurs (24) pour l'extrusion du tube intérieur (27) dans le tube métallique soudé (16),
- un premier moyen de refroidissement (30) pour laisser refroidir le tube d'assemblage intermédiaire (28) comprenant le tube intérieur (27) et le tube métallique (16), et
- un moyen d'extrusion de tubes extérieurs (36) pour extruder le tube extérieur (39) sur le tube d'assemblage intermédiaire (28) pour fabriquer le tube d'assemblage multicouches (12).

2. Système selon la revendication 1, **caractérisé par** un moyen de pressurisation pneumatique pour pressuriser par air comprimé le tube intérieur (27) extrudé contre le tube métallique (16) pour presser de l'intérieur le tube intérieur extrudé (27) contre le tube métallique (16) soudé, et un moyen de pinçage (46) pour pincer et fermer le tube d'assemblage intermédiaire (28) à l'effet de maintenir une pression interne dans le tube intérieur extrudé (27), le moyen de pinçage (46) étant déplaçable dans le premier moyen de refroidissement (30) le long d'un trajet de transport dudit tube d'assemblage intermédiaire (28).

3. Système selon la revendication 1 ou 2, **caractérisé en ce que** le premier moyen de refroidissement (30) comprend un trajet de transport dudit tube d'assemblage intermédiaire (28), dans lequel trajet le tube d'assemblage intermédiaire (28) peut être transporter à travers un bain de refroidissement (32).

4. Système selon la revendication 3, **caractérisé en ce que** le premier moyen de refroidissement (30) comprend une station de séchage pour sécher le tube d'assemblage intermédiaire (28) transporté à travers le bain de refroidissement (32).

5. Système selon une des revendications 1 à 4, **caractérisé en ce que** le premier moyen de refroidissement (30) comprend un trajet de transport dudit tube d'assemblage intermédiaire (28), dans lequel trajet le tube d'assemblage intermédiaire (28) est exposé à l'environnement.

6. Système selon une des revendications 1 à 5, **caractérisé par** un deuxième moyen de refroidissement (40) pour laisser refroidir le tube d'assemblage multicouches (12) après la déposition du tube extérieur (39) sur le tube d'assemblage intermédiaire (28).

7. Système selon une des revendications 1 à 6, **caractérisé en ce que** le deuxième moyen de refroidissement (40) comprend un trajet de transport dudit tube d'assemblage multicouches (12), dans lequel trajet le tube d'assemblage multicouches (12) peut être transporter à travers un bain de refroidissement (42).

8. Système selon la revendication 7, **caractérisé en ce que** le deuxième moyen de refroidissement (40) comprend une station de séchage pour sécher le tube d'assemblage multicouches (12) transporté à travers le bain de refroidissement (42).

9. Système selon une des revendications 1 à 8, **caractérisé en ce que** le moyen de façonnage de tubes métalliques (13) est prévu pour former un tube métallique (16) avec des bords (20) chevauchants ou bout-à-bout de la bande métallique (14).

10. Système selon la revendication 9, **caractérisé en ce que** les bords longitudinaux (20) de la bande métallique (14) du tube métallique (16) façonné s'étendent sensiblement selon la longueur du tube métallique (16) ou en hélice.

11. Système selon une des revendications 1 à 10, **caractérisé en ce qu'**entre la station de soudage (18) et le moyen d'extrusion de tubes extérieurs (36), il est prévu une station de mesurage (44) pour mesurer le diamètre extérieur du tube métallique (16) et/ou du tube d'assemblage intermédiaire (28).
